# EUROPÄISCHE PATENTSCHRIFT

(11) **EP 1 161 761 B1**
(45) Veröffentlichungstag und Bekanntmachung des Hinweises auf die Patenterteilung: **16.10.2002**
(21) Anmeldenummer: 00906162.3
(22) Anmeldetag: 24.01.2000
(51) Int. Cl.: H01H 3/16

(54) **SCHALTER, INSBESONDERE KFZ-BREMSLICHTSCHALTER**
SWITCH, ESPECIALLY A MOTOR VEHICLE BRAKE-LIGHT SWITCH
COMMUTATEUR, EN PARTICULIER POUR LES FEUX DE FREINAGE DE VEHICULES A MOTEUR

(30) Priorität: 12.02.1999 DE 19906036
(43) Veröffentlichungstag der Anmeldung: 12.12.2001
(73) Patentinhaber: TRW Automotive Electronics & Components GmbH & Co. KG, 78315 Radolfzell (DE)
(72) Erfinder: ALTMANN, Markus, D-78345 Bankholzen (DE); PAVLIS, Zdenek, D-78224 Singen (DE)
(74) Vertreter: Eder, Thomas, Dr.-Ing.
(86) Internationale Anmeldenummer: DE0000192
(87) Internationale Veröffentlichungsnummer: WO00048213

(56) Entgegenhaltungen:
- US-A- 4 604 506

## Beschreibung

Die Erfindung bezieht sich auf einen Schalter, insbesondere Kfz-Bremslichtschalter, welcher durch ein Schaltelement betätigbar ist, wobei zwischen dem Schalter und dem Schaltelement eine Justiervorrichtung angeordnet ist. Ein solcher Schalter gemäß Oberbegriff von Patentanspruch 1 ist z.B. in US-A-4 604 506 beschrieben.

Als Stand der Technik sind bereits eine große Anzahl derartiger Schalter bekannt, welche hauptsächlich als selbstjustierende Stößelschalter ausgebildet sind (DE 32 30 414 C3, DE 196 03 135 C1, DE 196 45 058 C1). Diese Schalter sind relativ kompliziert gestaltet und weisen meist einen besonders geformten Schaft auf, welcher mit einem Klinkengesperre zusammenwirkt. Über den Schaft und das Klinkengesperre lässt sich eine Justierung durchführen.

Gegenüber dem vorgenannten Stand der Technik besteht die Aufgabe der vorliegenden Erfindung darin, einen Schalter, insbesondere Kfz-Bremslichtschalter zu schaffen, welcher bei einfachem Aufbau eine sehr gute Justierung ermöglicht.

Diese Aufgabe wird erfindungsgemäß dadurch gelöst, dass die Justiervorrichtung ein Hebelarm ist, welcher an einer Seite mit dem Schaltelement und an der anderen Seite mit einem Betätigungsteil des Schalters verbunden ist. Dieser Hebelarm ist eine einfach ausgebildete Konstruktion, wobei trotzdem gewährleistet ist, den Schalter im Hinblick auf das Schaltelement funktionsrichtig zu justieren. Das Betätigungsteil kann hierbei eine federbeaufschlagte Welle des Schalters sein, welche von dem aus Draht ausgebildeten Hebelarm zumindest teilweise einfach umschlungen ist.

Alternativ besteht die Möglichkeit, dass der Draht die Welle mehrfach umschlingt und mit dieser kraft- oder formschlüssig verbunden ist, beispielsweise durch Reibschluss.

Nach einem anderen Merkmal der Erfindung kann die aus Kunststoff bestehende Welle mit einem durch eine Feder beaufschlagten Schalthebel verbunden sein, durch welchen das Öffnen und/oder Schließen mindestens eines Kontaktes des Schalters steuerbar ist. Diese Welle kann mehrfach abgesetzt ausgebildet sein und einen Befestigungsbereich für den Schalthebel und mindestens einen Anschlag zur Drehbegrenzung aufweisen.

Nach einem anderen Merkmal der Erfindung besteht die Möglichkeit, dass der oder die Kontakte, die Feder, der Schalthebel und die Welle zumindest teilweise in einem Gehäuse untergebracht sind. Die Feder kann vorteilhafterweise als stirnseitig den Schalthebel beaufschlagende Druckfeder ausgebildet sein.

Nach einem anderen Merkmal der Erfindung kann der Draht an der dem Schaltelement zugewandten Seite eine Abwinklung aufweisen, welche kraft- oder formschlüssig mit dem Schaltelement verbunden ist. Diese Abwinklung kann federbelastet die Ober- oder Unterseite des Schaltelements beaufschlagen.

Die Erfindung wird nachfolgend anhand eines in der Zeichnung dargestellten Ausführungsbeispiels näher beschrieben. In der Zeichnung zeigen:
- Fig. 1: eine schematische Seitenansicht des Schalters und des Schaltelements;
- Fig. 2: eine Draufsicht auf den Schalter und das Schaltelement, teils gebrochen;
- Fig. 3: eine vergrößerte Darstellung des Schalters und der Justiervorrichtung in Draufsicht;
- Fig. 4: einen Schnitt nach der Linie IV-IV in Fig. 3;
- Fig. 5: einen Schnitt nach der Linie V-V in Fig. 3;
- Fig. 6: einen Schnitt nach der Linie VI-VI in Fig. 3;
- Fig. 7: eine Ausführungsform ähnlich nach Fig. 6 bei Betätigung des Schalters.

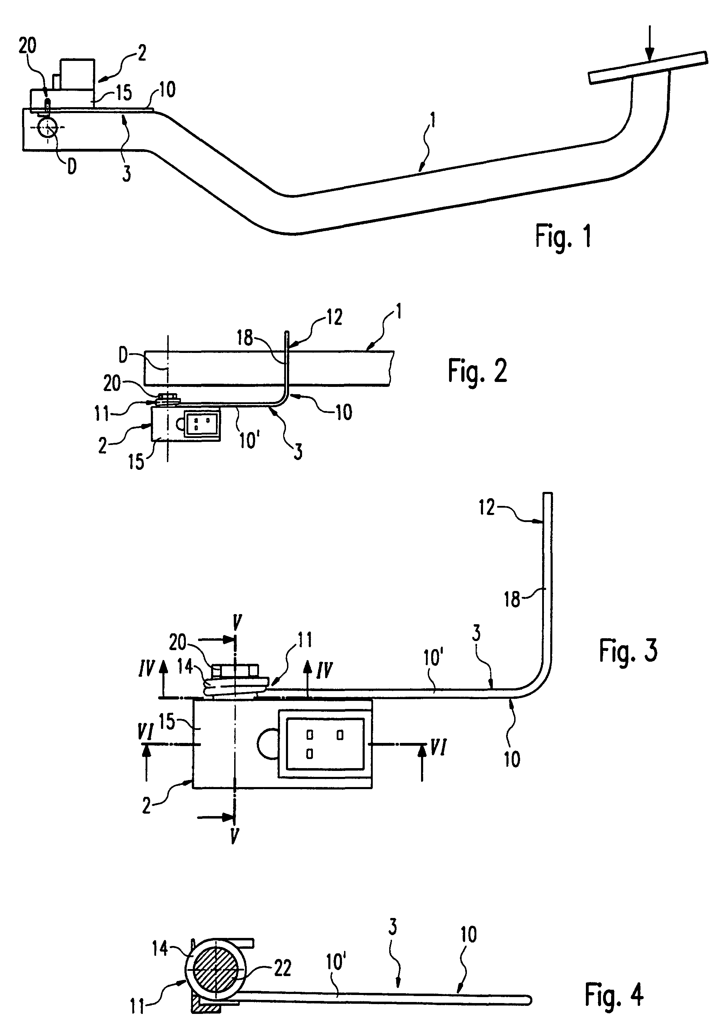

In den Fig. 1 und 2 ist schematisch in Seitenansicht bzw. in Draufsicht ein Schaltelement 1 dargestellt, welches beispielsweise das Bremspedal eines Kraftfahrzeuges ist. Mit diesem Schaltelement 1 arbeitet ein Schalter 2, insbesondere ein Kfz-Bremslichtschalter zusammen, wobei sich zwischen dem Schalter 2 und dem Schaltelement 1 eine Justiervorrichtung 3 befindet, durch welche eine funktionssichere Einstellung des Schalters 2 gegenüber dem Schaltelement 1 individuell gewährleistet ist.

Diese Justiervorrichtung 3 besteht nach den Fig. 2, 3 und 4 aus einem Hebelarm 10, welcher an einer Seite 12 (Fig. 2) mit dem Schaltelement 1 und an der anderen Seite 11 mit einem Betätigungsteil 20 des Schalters 2 verbunden ist. Dieser Hebelarm 10 kann aus einem Draht 10' bestehen, wobei der Draht 10' an der dem Schaltelement 1 zugewandten Seite 12 eine Abwinklung 18 aufweist, welche kraft- oder formschlüssig mit dem Schaltelement 1 verbunden ist; bei der vorliegenden Ausführungsform liegt die Abwinklung 18 federbelastet auf der Oberseite des Schaltelements 1.

In nicht näher dargestellter Ausführungsmöglichkeit ist es auch denkbar, die Abwinklung 18 unterhalb des Schaltelements anzuordnen oder vor oder hinter dem Drehpunkt D (Fig. 1) des Bremspedals, d. h. des Schaltelements 1.

Das Betätigungsteil 20 des Schalters 2 kann als Welle 22 ausgebildet sein, welche nach Fig. 3 und 4 beispielsweise mehrfach von dem Draht 10' umschlungen wird; es ergeben sich damit Windungen 14, welche die Welle 22 mit Reibschluss umfassen.

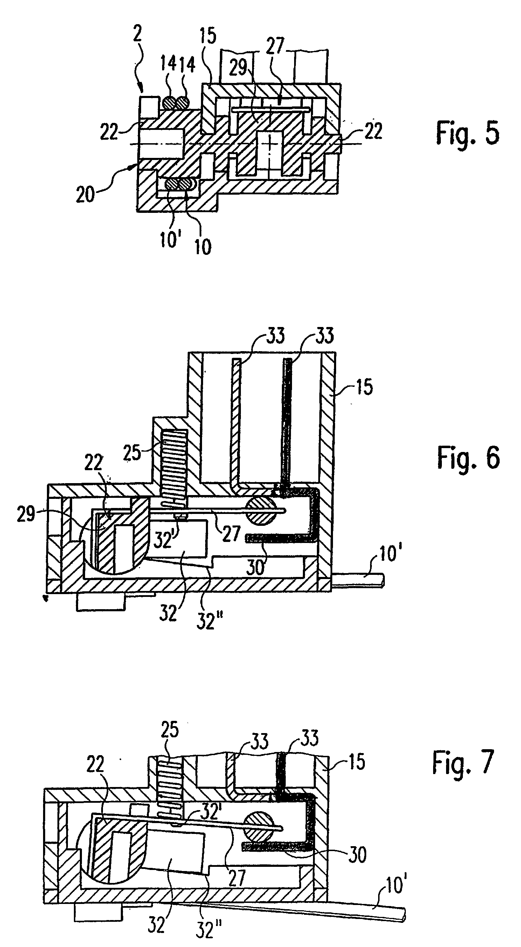

Nach Fig. 5 kann die aus Kunststoff bestehende Welle mehrfach abgesetzt sein, wobei nach Fig. 6 und 7 die Welle 22 mit einem durch eine Feder 25 beaufschlagten Schalthebel 27 verbunden ist, durch welchen das Öffnen und/oder Schließen mindestens eines Kontaktes 30 mit Kontaktstiften 33 des Schalters 2 steuerbar ist. Der Schalter 2 weist ein Gehäuse 15 auf, in welchem der Kontakt 30, die Kontaktstifte 33, die Feder 25, der Schalthebel 27 und die Welle 22 zumindest teilweise untergebracht sind.

Aus Fig. 6 und 7 geht hervor, dass die mehrfach abgesetzte Welle 22 einen Befestigungsbereich 29 für den Schalthebel 27 und mindestens einen Anschlag 32 zur Drehbegrenzung gegenüber Anschlägen 32' und 32" des Gehäuses 15 aufweist. Die Feder 25 ist als stirnseitig den Schalthebel 27 beaufschlagende Druckfeder ausgebildet.

Über diese Druckfeder 25 wird im Zusammenwirken mit dem Schalthebel 27 die Welle 22 federbeaufschlagt, wobei sich diese Wirkung über die Justiervorrichtung 3, d. h. den Draht 10' auf das Schaltelement 1 auswirkt.

Durch Winkelverstellung der Windungen 14 des Justierelements 3 im Hinblick auf die Welle 22 lässt sich eine funktionsrichtige Justierung zwischen dem Schalter 2 und dem Schaltelement 1 auf einfache Weise durchführen.

Fig. 6 zeigt die Ruhestellung des Schalters 2; das Schaltelement, d.h. das Bremspedal 1 befindet sich in der Position nach Fig. 1. Wird nunmehr das Bremspedal 1 in Pfeilrichtung betätigt, so erfolgt ein Drehen um den Drehpunkt D, wobei über die Justiervorrichtung 3 diese Bewegung auf den Schalter 2 weitergeleitet wird und damit der Schalthebel 27 aus der Ruheposition nach Fig. 6 in die Betätigungsposition nach Fig. 7 gedreht wird.

Hier beaufschlagt der Schalthebel 27 den Kontakt 30, so dass das Bremslicht aufleuchtet. Diese Drehbewegung wird durch die Anlage des Anschlags 32 der Welle 22 an dem unteren Anschlag 32" des Gehäuses 15 begrenzt.

Wird das Bremspedal 1 in seiner Druckbewegung zurückgenommen, löst sich die Verbindung zwischen dem Schalthebel 27 und dem Kontakt 30 und das Bremslicht ist nicht betätigt. Der Anschlag 32 der Welle 22 liegt dann nach Fig. 6 an dem oberen Anschlag 32' des Gehäuses 15 an.

Alle Bewegungen des Schaltelements 1, d.h. beispielsweise des Bremspedals eines Kraftfahrzeuges werden einwandfrei über das Justierelement 3 auf den Schalter 2 übertragen, so dass trotz des einfachen Aufbaus der gesamten Einheit eine sehr gute Justierung und damit eine individuelle Anpassung gegeben ist.

## Patentansprüche

1. Schalter (2), insbesondere Kfz-Bremslichtschalter, welcher durch ein Schaltelement (1) betätigbar ist, wobei zwischen dem Schalter (2) und dem Schaltelement (1) eine Justiervorrichtung (3) angeordnet ist, welche als Hebelarm (10) ausgebildet ist, der an einer Seite (12) mit dem Schaltelement (1) und an der anderen Seite (11) mit einem Betätigungsteil (20) des Schalters verbunden ist,
**dadurch gekennzeichnet,**
**dass** das Betätigungsteil (20) eine federbeaufschlagte Welle (22) des Schalters (2) ist, welche von dem aus Draht (10') ausgebildeten Hebelarm (10) zumindest einfach umschlungen ist.

2. Schalter nach Anspruch 1, **dadurch gekennzeichnet, dass** der Draht (10') die Welle (22) mehrfach umschlingt (14) und mit dieser kraft - oder formschlüssig verbunden ist.

3. Schalter nach Anspruch 1, **dadurch gekennzeichnet, dass** die aus Kunststoff bestehende Welle (22) mit einem durch eine Feder (25) beaufschlagten Schalthebel (27) verbunden ist, durch welchen das Öffnen und/oder Schließen mindestens eines Kontaktes (30) des Schalters (2) steuerbar ist.

4. Schalter nach Anspruch 3, **dadurch gekennzeichnet, dass** die Welle (22) mehrfach abgesetzt ist, einen Befestigungsbereich (29) für den Schalthebel (27) und mindestens einen Anschlag (32) zur Drehbegrenzung aufweist.

5. Schalter nach einem oder mehreren der vorhergehenden Ansprüche, **gekennzeichnet durch** ein den Kontakt (30), die Feder (25), den Schalthebel (27) und die Welle (22) zumindest teilweise aufnehmendes Gehäuse (15).

6. Schalter nach Anspruch 5, **dadurch gekennzeichnet, dass** die Feder (25) als stirnseitig den Schalthebel (27) beaufschlagende Druckfeder ausgebildet ist.

7. Schalter nach Anspruch 1 oder 2, **dadurch gekennzeichnet, dass** der Draht (10') an der dem Schaltelement (1) zugewandten Seite (11) eine Abwinklung (18) aufweist, welche kraft- oder formschlüssig mit dem Schaltelement (1) verbunden ist.

8. Schalter nach Anspruch 7, **dadurch gekennzeichnet, dass** die Abwinklung (18) federbelastet die Ober- oder Unterseite des Schaltelements (1) beaufschlagt.

## Claims

1. Switch (2), in particular motor vehicle brake light switch, which can be actuated by means of a switching element (1), an adjustment device (3) being arranged between the switch (2) and the switching element (1), which adjustment device (3) is embodied as a lever arm (10) which is connected at one end (12) to the switching element (1) and at the other end (11) to an activation part (20) of the switch, **characterized in that** the activation part (20) is a spring-loaded shaft (22) of the switch (2) around which the lever arm (10) which is made of wire (10') is wrapped at least once.

2. Switch according to Claim 1, **characterized in that** the wire (10') is wrapped (14) around the shaft (22) repeatedly and is connected thereto in a frictionally locking or positively locking fashion.

3. Switch according to Claim 1, **characterized in that** the shaft (22) which is composed of plastic is connected to a switching lever (27) which is loaded by a spring (25) and by means of which the opening and/or closing of at least one contact (30) of the switch (2) can be controlled.

4. Switch according to Claim 3, **characterized in that** the shaft (22) is repeatedly stepped and has an attachment region (29) for the switching lever (27) and at least one stop (32) for limiting rotation.

5. Switch according to one or more of the preceding claims, **characterized by** a housing (15) which at least partially accommodates the contact (30), the spring (25), the switching lever (27) and the shaft (22).

6. Switch according to Claim 5, **characterized in that** the spring (25) is embodied as a compression spring which loads the switching lever (27) at the end.

7. Switch according to Claim 1 or 2, **characterized in that** the wire (10') has, at the end (11) facing the switching element (1), a bent portion (18) which is connected to the switching element (1) in a frictionally locking or positively locking fashion.

8. Switch according to Claim 7, **characterized in that** the bent portion (18) loads the upper side or underside of the switching element (1) in a spring-loaded fashion.

## Revendications

1. Contacteur (2), en particulier contacteur de feu de stop pour un véhicule automobile, qui est actionné par un élément de contact (1), dans lequel est disposé, entre le contacteur (2) et l'élément de contact (1), un dispositif d'ajustement (3) ayant une forme de bras de levier (10) et qui est relié, d'un côté (12), à l'élément de contact (1) et de l'autre côté (11), à un élément d'actionnement (20) du contacteur,
**caractérisé en ce que**
l'élément d'actionnement (20) est un axe (22) du contacteur (2), sollicité par ressort, qui est entouré au moins une fois par le bras de levier (10) agencé sous forme de fil (10').

2. Contacteur selon la revendication 1, **caractérisé en ce que** le fil (10') entoure l'axe (22) plusieurs fois (14) et **en ce qu'**il est relié à celui-ci par engagement positif ou par adhérence.

3. Contacteur selon la revendication 1, **caractérisé en ce que** l'axe (22) réalisé en matière synthétique est relié à un levier de contact (27) sollicité par un ressort (25), par lequel peuvent être commandées l'ouverture et/ou la fermeture d'au moins un contact (30) du contacteur (2).

4. Contacteur selon la revendication 3, **caractérisé en ce que** l'axe (22) est étagé en plusieurs fois, et présente une zone de fixation (29) pour le levier de contact (27) et au moins une butée (32) pour limiter la rotation.

5. Contacteur selon une ou plusieurs des revendications précédentes, **caractérisé par** un logement (15) recevant le contact (30), le ressort (25), le levier de contact (27) et l'axe (22) au moins partiellement.

6. Contacteur selon la revendication 5, **caractérisé en ce que** le ressort (25) est agencé comme ressort de compression sollicitant frontalement le levier de contact (27).

7. Contacteur selon la revendication 1 ou 2, **caractérisé en ce que** le fil (10') présente, sur le côté (11) dirigé vers l'élément de contact (1), un pliage (18) qui est relié par engagement positif ou par adhérence à l'élément de contact (1).

8. Contacteur selon la revendication 7, **caractérisé en ce que** le pliage (18) sollicite par ressort le côté supérieur ou inférieur de l'élément de contact (1).
